# EUROPÄISCHE PATENTSCHRIFT

(11) **EP 2 851 222 B1**
(45) Veröffentlichungstag und Bekanntmachung des Hinweises auf die Patenterteilung: **11.04.2018**
(21) Anmeldenummer: 14183309.5
(22) Anmeldetag: 03.09.2014
(51) Int. Cl.: F16K 35/04, B60G 17/052, B60G 17/056

(54) **Hebe-Senk-Ventileinheit**
Raising lowering valve unit
Ensemble de vanne équipée d'un mécanisme de levage et d'abaissement

(30) Priorität: 23.09.2013 DE 102013110511
(43) Veröffentlichungstag der Anmeldung: 25.03.2015
(73) Patentinhaber: Haldex Brake Products Aktiebolag, 261 24 Landskrona (SE)
(72) Erfinder: Kraus, Alexander, 69115 Heidelberg (DE)
(74) Vertreter: REHBERG HÜPPE + PARTNER

(56) Entgegenhaltungen:
- EP-A1- 1 712 380
- EP-A1- 2 159 461
- EP-A1- 2 177 381
- DE-A1-102010 010 659
- DE-B3-102005 017 590
- DE-B4-102006 006 439

## Beschreibung

### TECHNISCHES GEBIET DER ERFINDUNG

Die Erfindung betrifft eine Hebe-Senk-Ventileinheit gemäß dem Oberbegriff von Anspruch 1, welche insbesondere manuell und willkürlich von einem Benutzer betätigbar ist, um ein Heben und Senken eines Fahrzeugaufbaus herbeizuführen, beispielsweise um das Niveau des Fahrzeugaufbaus an eine Rampe anzupassen. Weiterhin betrifft die Erfindung eine Luftfederungsanlage eines Nutzfahrzeuges mit einer solchen Hebe-Senk-Ventileinheit.

### STAND DER TECHNIK

Hebe-Senk-Ventileinheiten verfügen üblicherweise über eine Stellung FAHRT, in welcher die Hebe-Senk-Ventileinheit ein Niveauregelventil mit Luftfederbälgen verbindet, wodurch eine dynamische Niveauregelung während der Fahrt des Nutzfahrzeugs erfolgen kann und eine beladungsabhängige automatisierte Anpassung der Druckluftmenge in den Luftfederbälgen erfolgen kann mit dem Ziel ein gewünschtes Niveau des Fahrzeugaufbaus herbeizuführen oder beizubehalten. Darüber hinaus verfügen Hebe-Senk-Ventileinheiten über Stellungen HEBEN, SENKEN und STOPP. Während in der Stellung STOPP die Luftfederbälge abgesperrt sind, erfolgt in der Stellung HEBEN eine Verbindung der Luftfederbälge mit einer Druckluftquelle, insbesondere einem Druckluftbehälter, und in der Stellung SENKEN eine Verbindung der Luftfederbälge mit einer Entlüftung.

Für das Bedienkonzept derartiger Hebe-Senk-Ventileinheiten gibt es unterschiedliche Grundkonzepte:
a) Für eine Ausgestaltung als reines sogenanntes "Drehschieberventil" besitzt ein über einen Wählhebel betätigtes Schaltorgan ausschließlich einen Schwenk-Freiheitsgrad mit unterschiedlichen Schwenkstellungen HEBEN, SENKEN, STOPP und FAHRT, wobei auch mehrere Schwenkstellungen STOPP vorhanden sein können. Derartige Drehschieberventile sind bspw. in DE 10 2007 045 012 A1, DE 10 2007 005 979 A1, DE 10 2006 006 439 B4 offenbart.
b) Für ein anderes Bedienkonzept besitzt das Schaltorgan der Hebe-Senk-Ventileinheit sowohl einen translatorischen als auch einen rotatorischen Freiheitsgrad. In einer ersten Axialstellung des Schaltorgans, in welcher der rotatorische Freiheitsgrad blockiert ist, ist die Stellung FAHRT realisiert, während in einer anderen Axialstellung die Stellungen HEBEN, STOPP und SENKEN als unterschiedliche Schwenkstellungen realisiert sind. Entsprechende Ausführungsformen sind bspw. in EP 2 179 872 B1, DE 199 13 380 C1, DE 41 20 824 C1, DE 101 29 143 C1 und DE 10 2005 017 590 B3 offenbart.
c) In EP 1 712 380 B1 wird eine Hebe-Senk-Ventileinheit mit einem Schaltorgan vorgeschlagen, welches einen translatorischen sowie einen rotatorischen Freiheitsgrad besitzt. Hierbei sind die Schwenkstellungen HEBEN, SENKEN, STOPP einerseits und die Stellung FAHRT andererseits in zwei Axialstellungen realisiert, wie dies unter b) erläutert worden ist. Zusätzlich kann das Schaltorgan in der Stellung HEBEN oder der Stellung SENKEN in eine dritte Axialstellung überführt werden, in welcher eine automatische Rückstellung des Schaltorgans in die Stellung STOPP über eine Torsionsfeder blockiert ist, womit eine Verriegelung des Schaltorgans während des Hebens oder Senkens möglich ist.
d) Schließlich ist durchaus möglich, dass die Hebe-Senk-Ventileinheit mit mehreren einzelnen Bedienelementen ausgestattet ist jeweiligen zugeordneten Freiheitsgraden, über welche die Stellungen HEBEN, SENKEN, STOPP und FAHRT gewährleistet werden (vgl. DE 10 2007 045 012 A1).

Eine besondere Bedeutung kommt der Realisierung einer sogenannten Reset-to-Ride-Funktion für die Hebe-Senk-Ventileinheit zu, wie diese in DE 42 02 792 C2 vorgeschlagen worden ist. Vergisst der Benutzer die Überführung des Schaltorgans der Hebe-Senk-Ventileinheit in die Stellung FAHRT, bevor das Fahrzeug in Bewegung gesetzt wird, so hat dieses Versäumnis zur Folge, dass das Fahrzeug mit der nicht bestimmungsgemäßen Niveauhöhe des Fahrzeugaufbaus losfährt und während der Fahrt keine dynamische Niveauregelung erfolgt. Über die Reset-to-Ride-Funktion, welche gemäß DE 42 02 792 C2 gewährleistet wird durch eine stirnseitig des Schaltorgans angeordnete Steuerkammer, kann mit Druckbeaufschlagung der Steuerkammer über ein elektronisch angesteuertes Magnetventil das Schaltorgan automatisiert von der Axialstellung mit der Stellung STOPP in die Axialstellung FAHRT überführt werden.

Weitere jüngere Entwicklungen betreffen eine Rastierung der Hebe-Senk-Ventileinheit in der Stellung HEBEN und/oder SENKEN, um entbehrlich zu machen, dass für einen länger andauernden Hebevorgang oder Senkvorgang der Benutzer dauerhaft einen Betätigungsknopf oder Wählhebel betätigen muss. Vorteilhaft sein kann auch eine Verrastung oder Verriegelung einer Stellung SENKEN bei Transport des Nutzfahrzeugs auch einer Fähre, womit der Fahrzeugaufbau auf elastischen Puffern während des Transports auf der Fähre zuverlässig abgesetzt werden kann. Zur Gewährleistung einer Verrastung oder Verriegelung des Schaltorgans finden Rast- oder Verriegelungseinrichtungen Einsatz, bei welchen ein gegenüber einem Gehäuse geführtes Rast- oder Verriegelungselement, insbesondere ein Stift oder eine Kugel, in eine Rast- oder Verriegelungsausnehmung, insbesondere eine Nut, des Schaltorgans eingreift. Hierbei wird üblicherweise das Rast- oder Verriegelungselement über eine Feder in Richtung der Nut des Schaltorgans beaufschlagt, womit die Rast- oder Verriegelungsstellung durch die Feder gesichert ist. Um die Rast- oder Verriegelungsstellung aufzuheben und eine über zusätzliche Maßnahmen herbeigeführte Rückführung in eine Stellung STOPP und/oder FAHRT, beispielsweise über eine Rückstellfeder, zu ermöglichen, muss das Rast- oder Verriegelungselement gegen die Beaufschlagung der Feder von dem Schaltorgan weg bewegt werden. Um die erforderlichen Kräfte auf das Rast- oder Verriegelungselement aufzubringen, sind unterschiedliche Aktuatoren bekannt:
- Beispielsweise gemäß DE 10 2006 006 439 B4, EP 2 179 872 B1, DE 10 2007 005 979 A1, DE 10 2007 045 012 A1 ist der Aktuator als elektromagnetischer Aktuator ausgebildet, welcher unmittelbar auf das Rast- oder Verriegelungselement einwirkt.
- Möglich ist auch, dass der Aktuator als elektropneumatischer Aktuator ausgebildet ist, bei welchem über ein Magnetventil ein pneumatischer Steuerdruck gesteuert wird, welcher auf einen mit dem Rast- oder Verriegelungselement gekoppelten Kolben einwirkt. Während gemäß DE 199 13 380 C1 die mit dem pneumatischen Steuerdruck beaufschlagte Steuerkammer in Reihenschaltung zu der das Rast- oder Verriegelungselement beaufschlagenden Feder angeordnet ist, sodass mit Erhöhung des Steuerdrucks die Federkraft ansteigt, arbeitet gemäß EP 1 712 380 B1, DE 10 2006 006 439 B4 und DE 10 2005 017 590 B3 der pneumatische Steuerdruck gegen die Beaufschlagung durch die Feder, sodass eine Erhöhung des Steuerdrucks eine Reduzierung der Federkraft zur Folge hat.
- EP 2 179872 B1 schlägt eine Ausführungsform vor, bei welcher ein elektromagnetischer Aktuator nicht unmittelbar auf das Rast- oder Verriegelungselement einwirkt. Vielmehr wirkt der elektromagnetische Aktuator axial auf das Schaltorgan ein, was angesichts der abgeschrägten seitlichen Begrenzungsflächen der Nut, in welcher eine federbeaufschlagte Rastierkugel angeordnet ist, zur Folge hat, dass die Rastierkugel aus der Nut herausgedrückt wird. Hier wird somit die Rastiereinrichtung durch den elektromagnetischen Aktuator "überdrückt".

Der genannte Stand der Technik offenbart Ausführungsformen, bei welchen eine Hebe-Senk-Ventileinheit mit einem mechanisch gesteuertem Niveauregelventil oder auch einem elektronisch gesteuerten Niveauregelventil verbunden ist. EP 2 263 892 A1, EP 2 263 893 A1, EP 1 687 159 B1 und EP 1 687 160 B1 offenbaren Hebe-Senk-Ventileinheiten, in welche zusätzlich zu der manuell betätigbaren Hebe- und Senkfunktion auch eine elektronisch gesteuerte Niveauregelung integriert ist.

Das Dokument EP 1 712 380 A1 offenbart eine Hebe-Senke-Ventileinheit gemäß dem Oberbegriff von Anspruch 1.

### AUFGABE DER ERFINDUNG

Der vorliegenden Erfindung liegt die Aufgabe zugrunde, eine Hebe-Senk-Ventileinheit mit einer veränderten Rast- oder Verriegelungseinrichtung vorzuschlagen, welche insbesondere hinsichtlich der Bauraumbedingungen verändert ist. Des weiteren liegt der Erfindung die Aufgabe zugrunde, eine veränderte Luftfederungsanlage eines Nutzfahrzeugs mit einer Hebe-Senk-Ventileinheit vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht auf der Erkenntnis, dass bei bekannten Rast- oder Verriegelungseinrichtungen von Hebe-Senk-Ventileinheiten das Rast- oder Verriegelungselement gegenüber dem Gehäuse geführt ist und zur Herbeiführung der Rast- oder Verriegelungsstellung nach innen auf das Schaltorgan zu beaufschlagt werden muss. Dies erfordert eine komplexe Gestaltung des Gehäuses, einen vergrößerten Bauraum für die Hebe-Senk-Ventileinheit und das Erfordernis der Bereitstellung der Rast- oder Verriegelungsausnehmung an dem Schaltorgan. Erfindungsgemäß wird dieses durchgängig im Stand der Technik verwendete Prinzip umgekehrt, indem das Rast- oder Verriegelungselement überraschend in das Schaltorgan integriert, nämlich in diesem geführt wird. Zur Herbeiführung der Rast- oder Verriegelungsstellung wird das Rast- oder Verriegelungselement aus dem Schaltorgan herausbewegt. Überraschend haben der Erfindung zugrunde liegende Überlegungen gezeigt, dass die Integration des Rast- oder Verriegelungselements in das Schaltorgan möglich ist. Dies führt zu einer kompakten erfindungsgemäßen Ausgestaltung oder einer alternativen Ausgestaltung zu den Ausführungsformen gemäß dem Stand der Technik. Vorzugsweise wird im Rahmen der Erfindung die Rast- oder Verriegelungsaufnehmung an dem Gehäuse vorgesehen, insbesondere durch Nuten oder durch Rippen begrenzte Ausnehmungen des Gehäuses oder eines anderen Bauelements.

Für die Art der Integration des Rast- oder Verriegelungselements in das Schaltorgan gibt es im Rahmen der vorliegenden Erfindung vielfältige Möglichkeiten. In einer besonderen Ausgestaltung der Erfindung besitzt das Schaltorgan eine Ausnehmung, welche quer zur Bewegungsachse des Schaltorgans orientiert ist. In diesem Fall kann das Rast- oder Verriegelungselement zumindest teilweise in dieser Ausnehmung angeordnet sein und über die Ausnehmung, ggf. auch unter Zwischenschaltung zusätzlicher Führungselemente, geführt sein.

Im Rahmen der Erfindung bestehen vielfältige Möglichkeiten für die Beeinflussung der Kraftverhältnisse an dem Rast- oder Verriegelungselement, beispielsweise für die Beeinflussung der Betätigungscharakteristik hinsichtlich der erforderlichen Kräfte und Kraftverläufe zur Veränderung der Stellung des Rast- oder Verriegelungselements und/oder für die Herbeiführung einer Rast- oder Verriegelungskraft in der Rast- oder Verriegelungsstellung. Für eine erfindungsgemäße Hebe-Senk-Ventileinheit ist eine Feder vorhanden. Ein Federfußpunkt der Feder ist an dem Schaltorgan abgestützt. Der andere Federfußpunkt der Feder ist an dem Rast- oder Verriegelungselement abgestützt. Über die Feder kann eine Gleichgewichtslage vorgegeben werden, welche eine bevorzugte Stellung des Rast- oder Verriegelungselements bilden kann, aus welcher dieses nur herausbewegt wird, wenn über einen geeigneten Aktuator und/oder durch manuelle Betätigung durch den Benutzer zusätzliche Kräfte auf das Rast- oder Verriegelungselement aufgebracht werden. Für den Fall, dass das Schaltorgan in der quer zur Bewegungsachse orientierten Ausnehmung geführt ist, kann sich der erst genannte Federfußpunkt der Feder an einem Boden der Ausnehmung, einem Absatz der Ausnehmung oder einem in die Ausnehmung eingesetzten Einsatzkörper abstützen.

In bevorzugter Weiterbildung der Erfindung ist das Rast- oder Verriegelungselement über die Feder in die Rast- oder Verriegelungsstellung beaufschlagt, sodass ohne weitere einwirkenden Kräfte eine eingenommene Rast. oder Verriegelungsstellung über die Feder gesichert ist. Die ist insbesondere von Vorteil, wenn die über die Feder gesicherte Rast- oder Verriegelungsstellung auch nicht bei einem Defekt eines Aktuators zur Erzeugung von Kräften, die auf das Rast- oder Verriegelungselement wirken, verlassen werden soll.

Für die Ausbildung eines Aktuators zwecks Veränderung einer Stellung des Rast- oder Verriegelungselements gibt es vielfältige Möglichkeiten. Für eine erfindungsgemäße Ausgestaltung ist das Rast- oder Verriegelungselement mittels eines pneumatischen Steuerdrucks verrastbar oder verriegelbar und/oder entrastbar oder entriegelbar. Ein pneumatischer Druck für die Bereitstellung der Energie zum Verrasten, Verriegeln, Entrasten oder Entriegeln ist an der Hebe-Senk-Ventileinheit ohnehin verfügbar, wobei je nach Gestaltung einer Betätigungs- oder Kolbenfläche für den pneumatischen Steuerdruck auch verhältnismäßig große Kräfte zum Verrasten, Verriegeln, Entrasten oder Entriegeln bereitgestellt werden können. Der pneumatische Steuerdruck kann beispielsweise über ein Ventil bereitgestellt werden, welches manuell betätigt wird, bewegungsgesteuert (beispielsweise für das Erreichen einer maximalen oder minimalen Niveauhöhe) betätigt werden oder über ein Magnetventil gesteuert werden, um nur einige nicht beschränkende Beispiele zu nennen.

Auch für die Zuführung des pneumatischen Steuerdrucks zu dem Rast- oder Verriegelungselement gibt es vielfältige Möglichkeiten. So kann bspw. der pneumatische Steuerdruck über einen radialen Kanal des Schaltorgans einen Steuerraum für das Rast- oder Verriegelungselement oder einer Kolben- oder Betätigungsfläche des Rast- oder Verriegelungselements zugeführt werden. In besonderer Ausgestaltung ist der pneumatische Steuerdruck dem Rast- oder Verriegelungselement über einen sich (zumindest teilweise) durch das Schaltorgan hindurch erstreckenden (Steuer-)Kanal und/oder einen Innenraum des Schaltorgans zuführbar, wobei der Steuerkanal beispielsweise in axialer Richtung oder in Richtung der Bewegungsachse des Schaltorgans orientiert sein kann. Hierdurch ergibt sich eine besonders kompakte Ausgestaltung, wobei durch den Kanal auch etwaige Einrichtungen zur Steuerung des pneumatischen Steuerdrucks von dem Rast- oder Verriegelungselement weg verlagert werden können, beispielsweise in Richtung der Bewegungsachse vor oder hinter das Schaltorgan.

Erweiterte Steuerungsmöglichkeiten, welche auch eine Regelung umfassen können, ergeben sich, wenn das Rast- oder Verriegelungselement gemäß einer weiteren erfindungsgemäßen Ausgestaltung in Abhängigkeit eines elektrischen Signals verrastbar oder verriegelbar ist und/oder entrastbar oder entriegelbar ist, wobei das elektrische Steuersignal über eine CPU (die auch Teil der Hebe-Senk-Ventileinheit sein kann oder extern von dieser angeordnet sein kann) vorgegeben werden kann, welche nach Auswertung geeigneter Kriterien das elektrische Steuersignal bestimmt. So kann beispielsweise ein elektrisches Steuersignal für eine Entrastung oder Entriegelung einer Stellung HEBEN oder SENKEN erzeugt werden, wenn eine maximale oder minimale Niveauhöhe erreicht ist, automatisch erkannt wird, dass eine gewünschte Rampenhöhe erreicht ist, ein Fahrbetrieb aufgenommen wird o. ä. Die Art der Umwandlung des elektrischen Steuersignals für die geeignete Beaufschlagung des Rast- oder Verriegelungselements mit einer Kraft kann hierbei beliebig sein. Möglich ist, dass das elektrische Steuersignal unmittelbar auf einen elektromagnetischen Aktuator einwirkt, um das Rast- oder Verriegelungselement in eine andere Stellung zu überführen. Um lediglich ein weiteres nicht beschränkendes Beispiel zu nennen, kann das elektrische Steuersignal auf ein Magnetventil einwirken, welches dann einen pneumatischen Steuerdruck erzeugt.

Die Zahl der möglichen Stellungen des Schaltorgans ist beliebig, wobei es sich hierbei um Axialstellungen und/oder Schwenkstellungen handeln kann, vgl. den eingangs erläuterten Stand der Technik mit den dazu beschriebenen unterschiedlichen Bedienkonzepten. In bevorzugter Ausgestaltung der Erfindung findet die erfindungsgemäße Ausgestaltung Einsatz für ein Schaltorgan, welches ausschließlich zwei Axialstellungen besitzt mit einer Axialstellung FAHRT sowie einer weiteren Axialstellung mit den Schwenkstellungen HEBEN, SENKEN und STOPP.

Besitzt das Schaltorgan ausschließlich zwei Axialstellungen, kann hiervon eine Axialstellung eine Vorzugsstellung oder Gleichgewichtslage sein, wobei beispielsweise eine Feder das Schaltorgan in diese bevorzugte Axialstellung beaufschlagen kann. Handelt es sich bei dieser bevorzugten Axialstellung um die Stellung FAHRT, kann der Benutzer durch Aufbringen von Betätigungskräften, welche die Kräfte der Feder überwinden, die andere Axialstellung herbeiführen. In dieser kann dann eine anderweitige Sicherung erfolgen, was auch mittels der Rast- oder Verriegelungseinrichtung erfolgen kann. Wird dann eine Reset-to-Ride-Funktion, unter Umständen auch mit der Beseitigung der Rast- oder Verriegelungswirkung der Rast- oder Verriegelungseinrichtung ausgeführt, veranlasst die Feder eine Rückstellung in die bevorzugte Axialstellung FAHRT. Für eine erfindungsgemäße Variante sind die beiden Axialstellungen jeweils stabil. Eine Axialstellung ist durch Aufbringung einer manuellen Betätigungskraft herbeiführbar. Die andere Axialstellung kann durch Ausführung der Reset-to-Ride-Funktion herbeigeführt werden.

Durchaus möglich ist, dass die Hebe-Senk-Ventileinheit für eine einkreisige Luftfilteranlage eingesetzt ist. Vorzugsweise ist aber die Hebe-Senk-Ventileinheit zweikreisig ausgebildet, wobei in der Hebe-Senk-Ventileinheit die beiden Kreise voneinander getrennt sind oder, zumindest in einigen Betriebstellungen der Hebe-Senk-Ventileinheit, miteinander verbunden sind, insbesondere über eine Drossel, welche schaltbar oder permanent wirksam sein kann.

Die Hebe-Senk-Ventileinheit kann für eine Ausgestaltung zusätzlich zu der Reset-to-Ride-Funktion ausschließlich manuell betätigbar sein. Für eine andere Ausgestaltung ist in die Hebe-Senk-Ventileinheit eine elektronische Niveauregelung integriert, was gewährleistet sein kann dadurch, dass manuell betätigte Ventile der Hebe-Senk-Ventileinheit sowohl manuell als auch elektronisch betätigbar sind. Ebenfalls möglich ist, dass in der Hebe-Senk-Ventileinheit parallele Leitungspfade vorhanden sind, wobei in einem Leitungspfad eine manuelle Betätigung möglich ist, während der andere Leitungspfad für die elektronische Niveauregelung zuständig ist. Diesbezüglich wird auf den eingangs genannten Stand der Technik, insbesondere EP 2 263 892 A1, EP 2 263 893 A1, EP 1 687 159 B1 und EP 1 687 160 B1, verwiesen.

Die Erfindung betrifft des weiteren eine Luftfederungsanlage eines Nutzfahrzeugs, in welcher eine Hebe-Senk-Ventileinheit der zuvor genannten Art verwendet ist. Hierbei ist die Hebe-Senk-Ventileinheit zwischen eine Druckluftquelle (und insbesondere ein Niveauregelventil) einerseits und mindestens einen Luftfederbalg (einkreisig oder zweikreisig) andererseits zwischengeordnet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Rast- oder Verriegelungsausnehmung die Rede ist, ist dies so zu verstehen, dass genau eine Rast- oder Verriegelungsausnehmung, zwei Rast- oder Verriegelungsausnehmungen oder mehr Rast- oder Verriegelungsausnehmungen vorhanden sind. Diese Merkmale können durch andere Merkmale ergänzt werden oder die einzigen Merkmale sein, aus denen das jeweilige Erzeugnis besteht. Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 4**: zeigen räumliche Ansichten einer erfindungsgemäßen Hebe-Senk-Ventileinheit in unterschiedlichen Betriebsstellungen, nämlich der Stellung FAHRT (Fig. 1), der Stellung STOPP (Fig. 2), der Stellung HEBEN (Fig. 3) und der Stellung SENKEN (Fig. 4).
- **Fig. 5**: zeigt eine rückseitige Ansicht der Hebe-Senk-Ventileinheit gemäß Fig. 1 bis 4.
- **Fig. 6 bis 20**: zeigen unterschiedliche geschnittene Darstellungen der Hebe-Senk-Ventileinheit gemäß Fig. 1 bis 5 in unterschiedlichen Betriebstellungen.
- **Fig. 21**: zeigt ein Schaltorgan der Hebe-Senk-Ventileinheit in einer räumlichen Darstellung.
- **Fig. 22**: zeigt eine zweikreisige Luftfederungsanlage mit einer Hebe-Senk-Ventileinheit.

### FIGURENBESCHREIBUNG

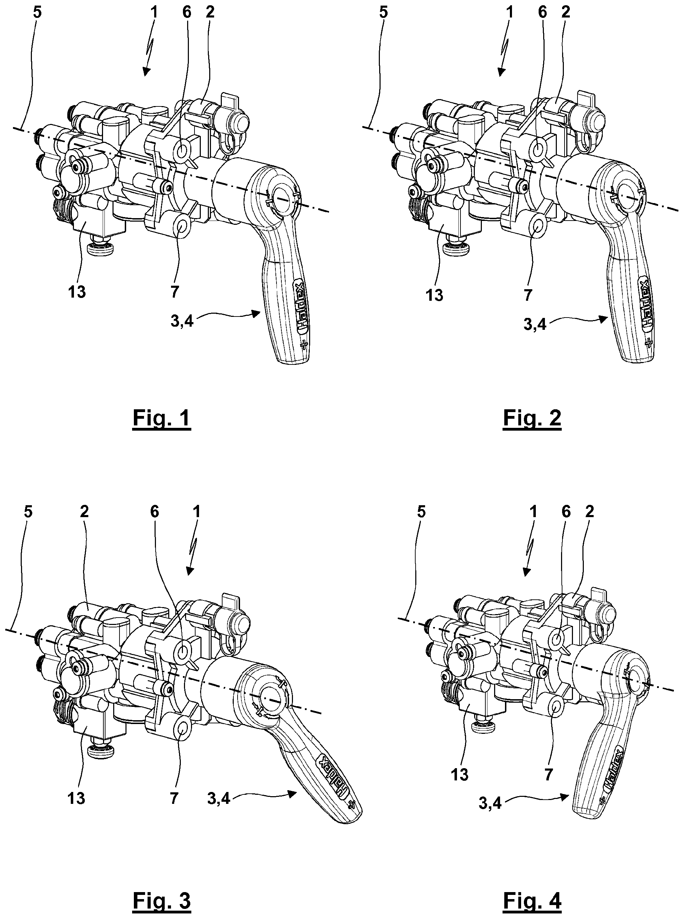

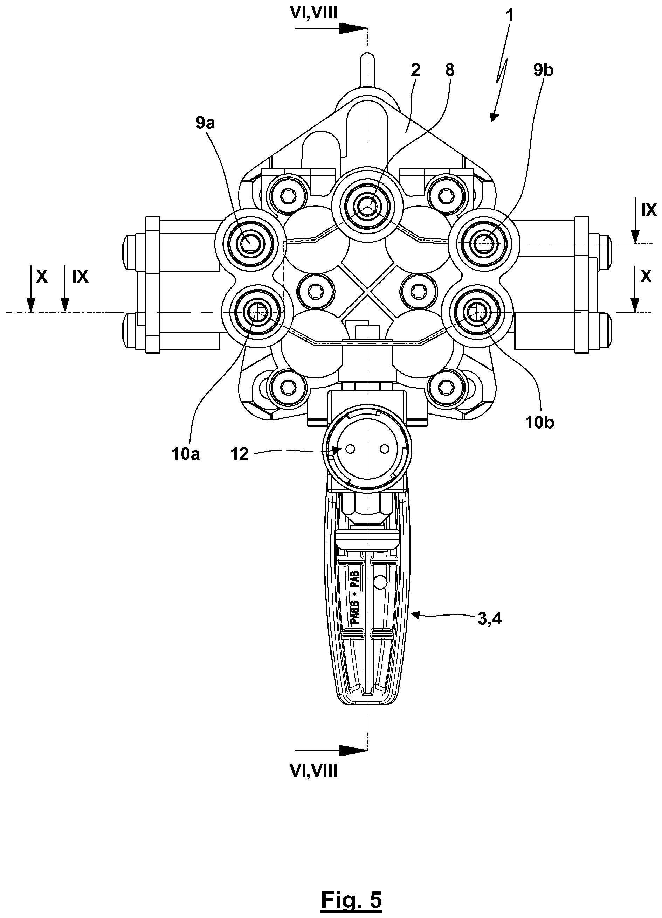

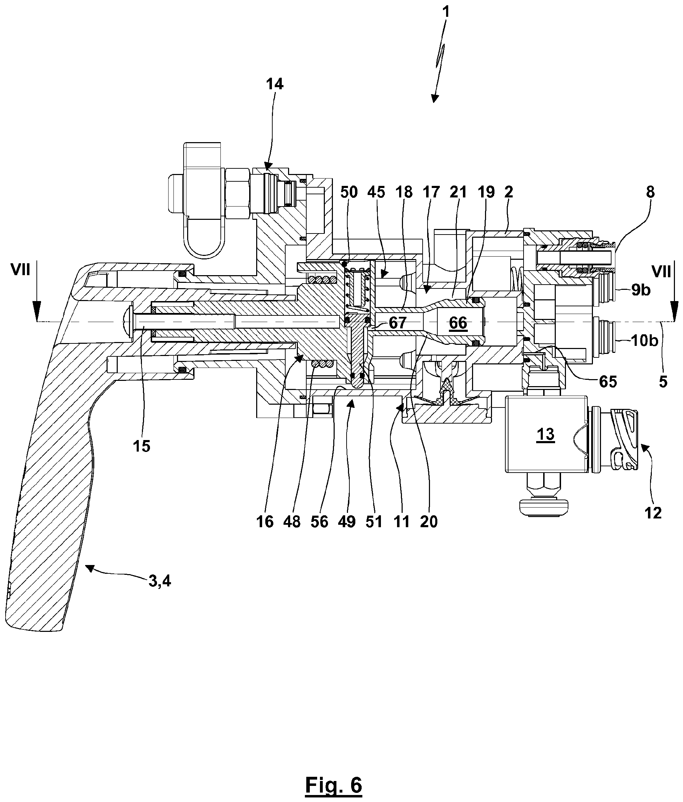

**Fig. 1** zeigt eine Hebe-Senk-Ventileinheit 1 mit einem Gehäuse 2 und einem gegenüber diesem manuell durch einen Benutzer bewegbaren Betätigungsorgan 3, hier ein Handhebel 4. Fig. 1 zeigt die Hebe-Senk-Ventileinheit 1 in der Stellung FAHRT. Durch Drücken des Handhebels 4 aus der Axialstellung gemäß Fig. 1 entlang einer Bewegungsachse 5 kann eine zweite Axialstellung gemäß **Fig. 2** herbei geführt werden, welche der Stellung STOPP entspricht. Ohne Veränderung der Axialstellung kann der Handhebel 4 bei Blickrichtung auf diesen um die Bewegungsachse 5 gegen den Uhrzeigersinn in die Stellung HEBEN gemäß **Fig. 3** sowie im Uhrzeigersinn in die Stellung SENKEN gemäß **Fig. 4** verschwenkt werden. Die Hebe-Senk-Ventileinheit 1 ist über Befestigungsaugen 6, 7 des Gehäuses 2 an einem Nutzfahrzeug, insbesondere an einem Tragrahmen des Nutzfahrzeugs, befestigt. Auf der dem Handhebel 4 abgewandten Seite besitzt das Gehäuse 2 der Hebe-Senk-Ventileinheit die in **Fig. 5** dargestellten Anschlüsse, nämlich einen Anschluss 8 für eine Verbindung mit einer Druckluftquelle 73, einen Anschluss 9 für eine Verbindung mit einem Niveauregelventil 74 (welches oftmals auch als Luftfederventil bezeichnet wird) sowie einen Anschluss 10 für eine Verbindung mit mindestens einem Luftfederbalg 72. In den Figuren ist eine Hebe-Senk-Ventileinheit 1 für eine zweikreisige Luftfederungsanlage 69 dargestellt, sodass zwei Anschlüsse 9a, 9b vorhanden sind, welche jeweils einem Anschluss des zweikreisigen Niveauregelventils zugeordnet sind, sowie zwei Anschlüsse 10a, 10b vorhanden sind, welche jeweils einem Kreis der zweikreisigen Luftfederungsanlage69 zugeordnet sind. Der Buchstabe a, b kennzeichnet hierbei den jeweiligen Kreis. Im Folgenden wird in der Beschreibung teilweise der den Kreis spezifizierende zusätzliche Buchstabe weggelassen, wenn die Ausführungen beide Kreise betreffen. Des weiteren verfügt die Hebe-Senk-Ventileinheit 1 über eine Entlüftung 11 (vgl. Fig. 6) sowie einen elektrischen Anschluss 12 für ein Magnetventil 13. Optional kann die Hebe-Senk-Ventileinheit 1 auch über einen Prüfanschluss 14 verfügen, welcher mit einem Anschluss 10a, 10b verbunden ist, sodass über den Prüfanschluss 14 der Druck in den Luftfederbälgen 72 eines Kreises geprüft bzw. erfasst werden kann.

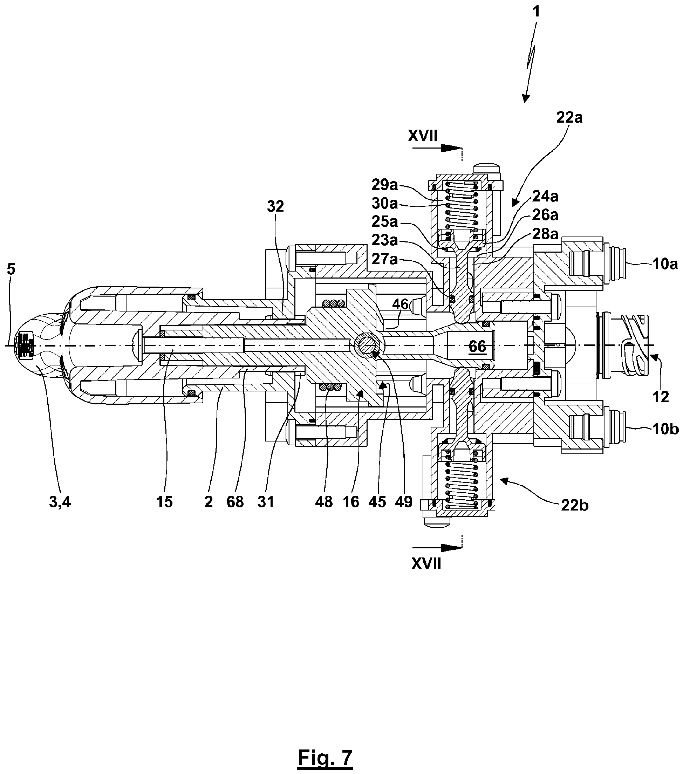

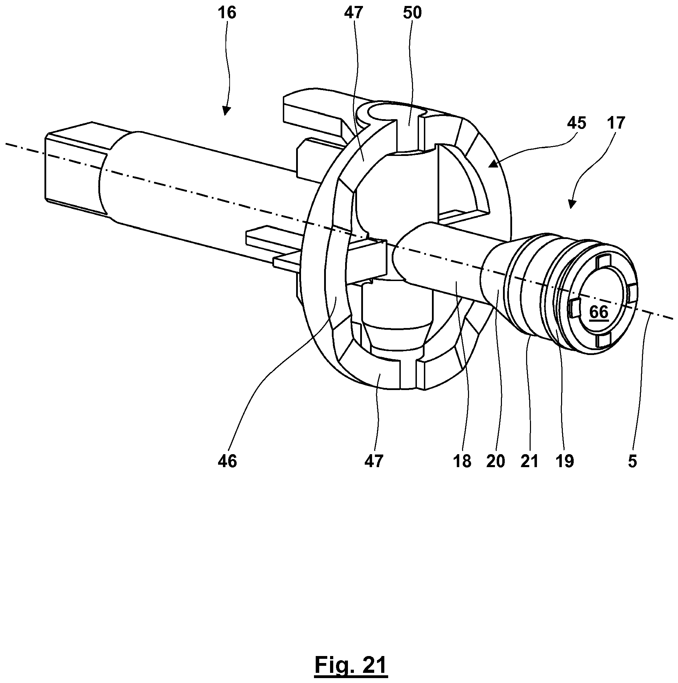

**Fig. 6** **und** **7** zeigen die Hebe-Senk-Ventileinheit in der Stellung FAHRT gemäß Fig. 1 in einem Schnitt VI - VI bzw. VII - VII. Starr mit dem Handhebel 4 verbunden, hier über eine Schraube 15 verschraubt, ist ein Schaltorgan 16, welches als Einzelteil räumlich in **Fig. 21** dargestellt ist. In dem dem Handhebel 4 abgewandten Endbereich bildet das Schaltorgan 16 eine koaxial zu der Bewegungsachse 5 orientierte Hülse 17 aus, welche mit einem ersten hohlzylindrischen Abschnitt 18, einen zweiten hohlzylindrischen Abschnitt 19, dessen Durchmesser größer sind als der des ersten Abschnitts 18 sowie einem die Abschnitte 18, 19 verbindenden hohlkegelstumpfförmigen Abschnitt 20 gebildet ist. Der Abschnitt 19 bildet hierbei den dem Handhebel 4 abgewandten Endbereich des Schaltorgans 16. Der Abschnitt 20 verfügt auf seiner Außenfläche über eine Umfangsnut 21.

Über die Hülse 17 wird ein Ventil 22 bei einem Wechsel zwischen den Stellungen FAHRT und STOPP (Übergang von Fig. 1 nach Fig. 2) betätigt. Da die dargestellte Hebe-Senk-Ventileinheit 1 für eine zweikreisige Luftfederungsanlage bestimmt ist, sind zwei derartige Ventile 22a, 22b vorhanden. Das Ventil 22 ist gebildet mit einem Stößel 23 mit zugeordnetem Ventilkörper 24, welcher mit einer Verdickung und einem von der Verdickung getragenen elastischen Dichtkörper 25 gebildet ist. In der Stellung STOPP kommt der Ventilkörper 24 mit dem Dichtkörper 25 unter Abdichtung zur Anlage an einen von dem Gehäuse 2 ausgebildeten Ventilsitz 26, womit das Ventil 22 abgesperrt ist. Hingegen ist in der Stellung FAHRT der Ventilkörper 24 mit Dichtkörper 25 beabstandet von dem Ventilsitz 26 angeordnet, womit das Ventil 22 geöffnet ist. Der Stößel ist unter Abdichtung mittels eines Dichtelements 27 gegenüber dem Gehäuse 2 geführt. Von dem Stößel 23, dem Dichtelement 27 und dem Gehäuse 2 sowie in geschlossenem Zustand dem Ventil 22 ist eine Luftfederbalgkammer 28 begrenzt, während auf der anderer Seite des Ventilkörpers 24 eine Niveauregelventilkammer 29 gebildet ist. In der Niveauregelventilkammer 29 ist eine Feder 30 angeordnet, die den Ventilkörper 24 und den Stößel 23 in Schließrichtung des Ventils 22 beaufschlagt. Während die Luftfederbalgkammer 28 mit dem Anschluss 10 verbunden ist, ist die Niveauregelventilkammer 29 mit dem Anschluss 9 verbunden.

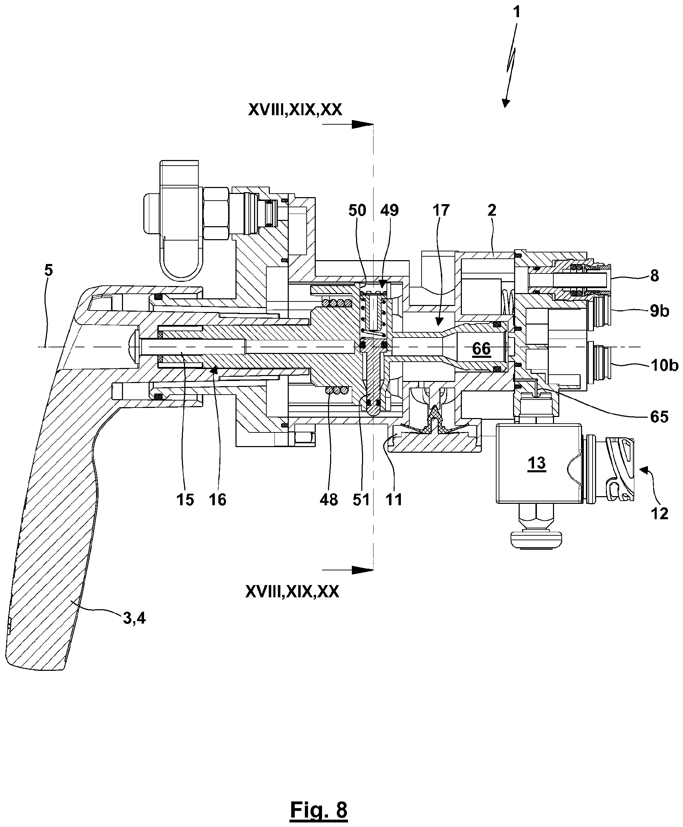

In der Stellung FAHRT gemäß Fig. 7 drückt der Abschnitt 19 den Stößel 23 gegen die Beaufschlagung der Feder 30 von der Bewegungsachse 5 weg, womit das Ventil 22 in seiner Öffnungsstellung ist, sodass eine Niveauregelung durch Verbindung des Niveauregelventils 74 mit den Luftfederbälgen 72 über die Hebe-Senk-Ventileinheit 1 erfolgt. Für die manuelle Betätigung des Handhebels 4 von der Stellung FAHRT in die Stellung STOPP gleitet der Stößel 23 entlang des Abschnittes 20 bis zum Abschnitt 18. In Folge des sich verringernden Durchmessers der Hülse 17 wird der Stößel 23 über die Feder 30 in Schließrichtung bewegt, bis sich das Ventil 22 in der erreichten Stellung STOPP, in welcher der Stößel 23 an dem Abschnitt 18 anliegt, seine Schließstellung erreicht hat, in welcher die Anschlüsse 9, 10 gegeneinander abgesperrt sind. Die auf gegenüberliegenden Seiten der Bewegungsachse 5 angeordneten Ventile 22a, 22b sind diesbezüglich gleich ausgebildet. **Fig. 8** zeigt ein im Wesentlichen Fig. 6 entsprechende Darstellung (hier allerdings mit Schnittführung durch den axial verschobenen Handhebel 4) in der Betriebsstellung STOPP.

Das Schaltorgan 16 oder hier eine das Schaltorgan 16 umschließende und im Inneren des Gehäuses 2 angeordnete Hülse 68 des Handhebels 4 besitzt im Bereich der Mantelfläche eine Kulisse 31 oder Rippen, welche zusammenwirken mit einem Kulissenstein 32 oder Vorsprung des Gehäuses 2 zwecks Führung des Handhebels 4 und des Schaltorgans 16 entlang eines translatorischen Freiheitsgrads zwischen den Stellungen FAHRT und STOPP (vgl. Fig. 7). Mit Erreichen der Stellung STOPP ist der Kulissenstein 32 außerhalb der Kulisse 31 angeordnet, sodass in der erreichten Axialstellung keine Führung mehr zwischen Kulisse 31 und Kulissenstein 32 gebildet ist. Somit kann in der in Fig. 8 dargestellten Axialstellung des Schaltorgans 16 eine Verschwenkung des Handhebels 4 mit Schaltorgan 16 um die Bewegungsachse 5 erfolgen von der Stellung STOPP in die Stellung HEBEN oder SENKEN.

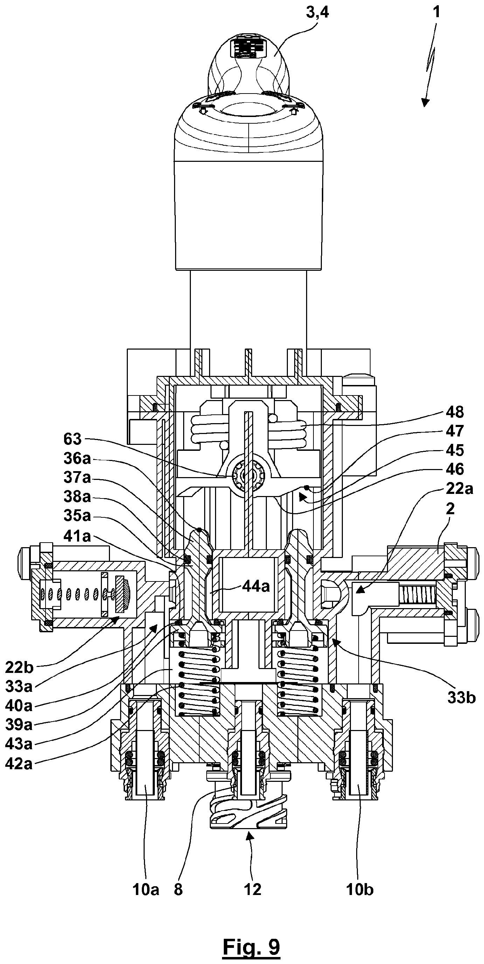

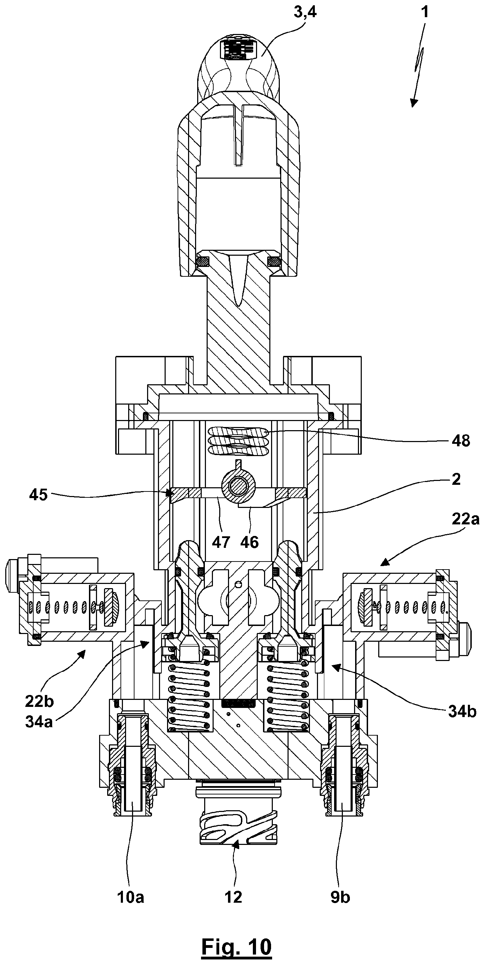

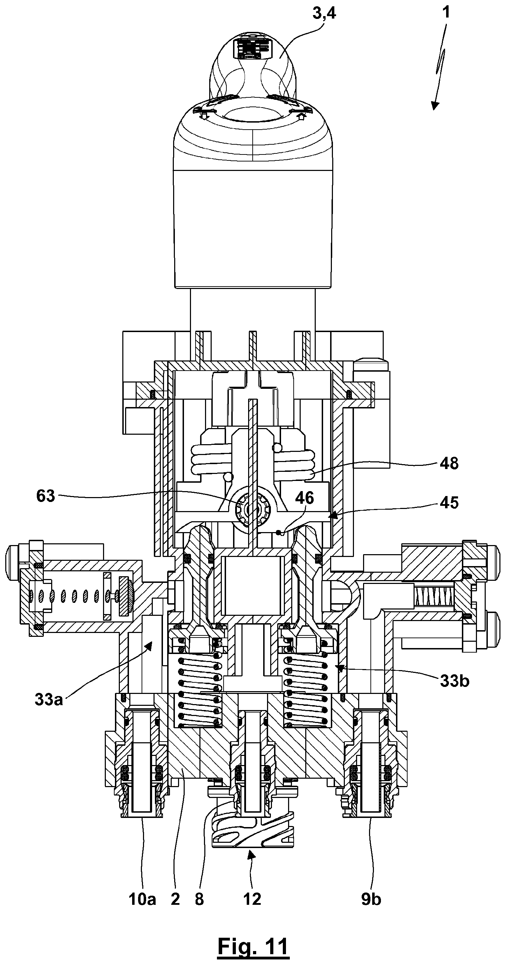

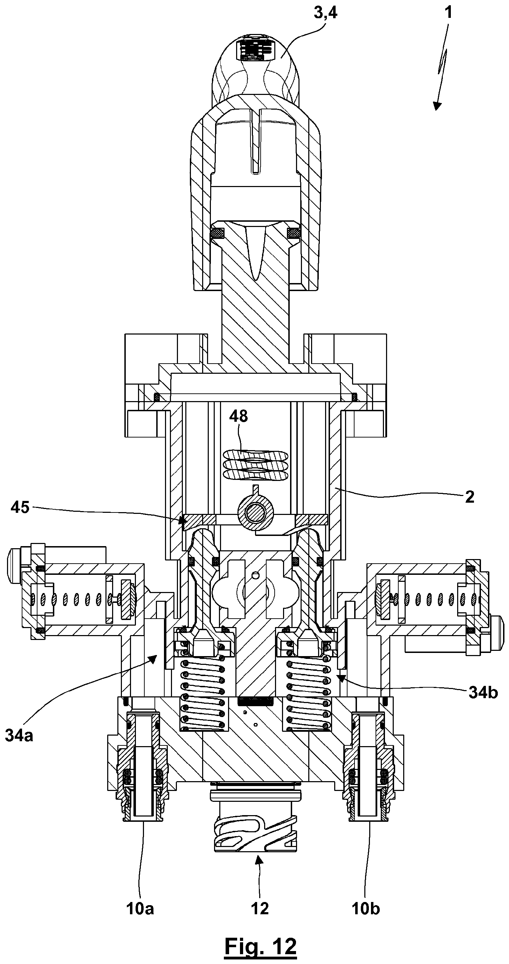

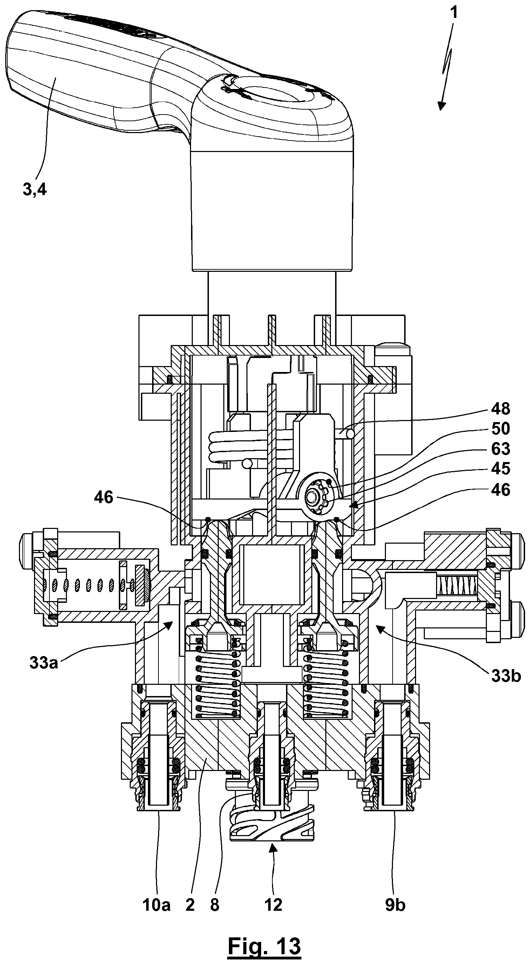

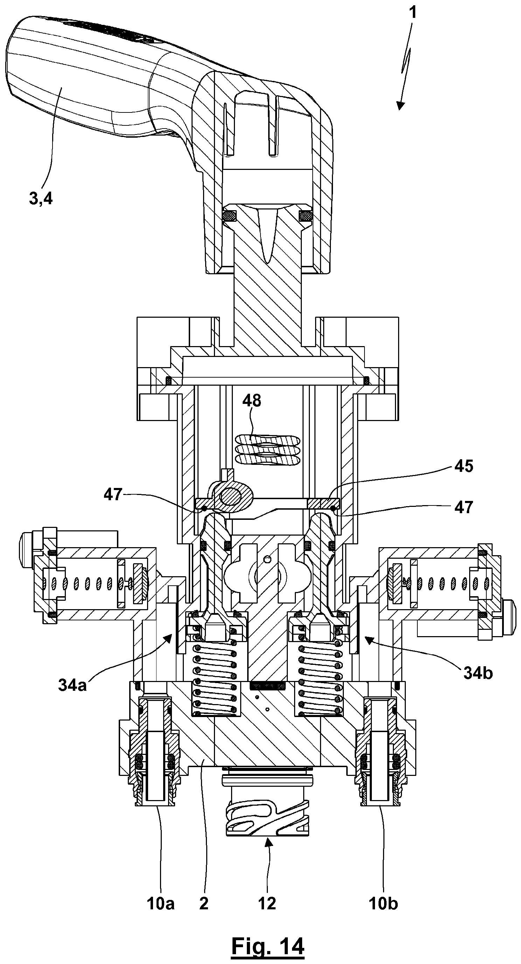

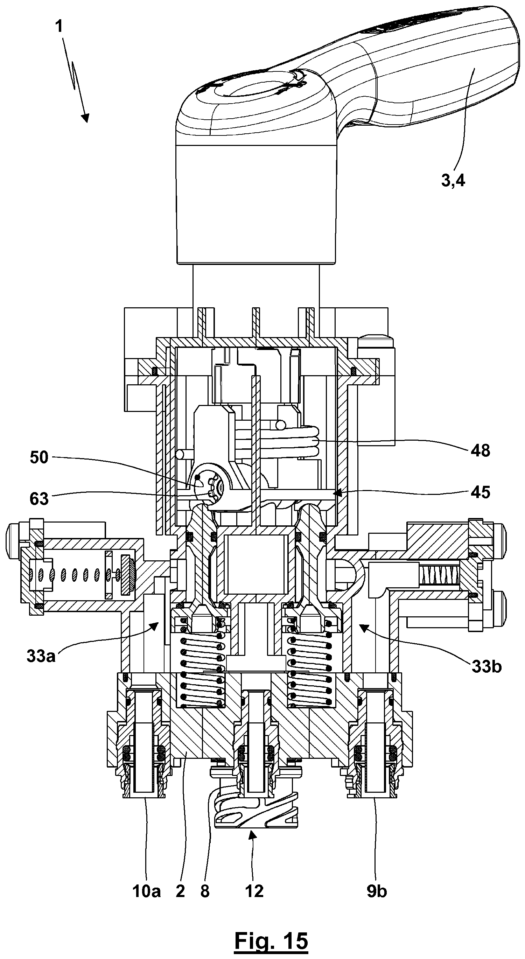

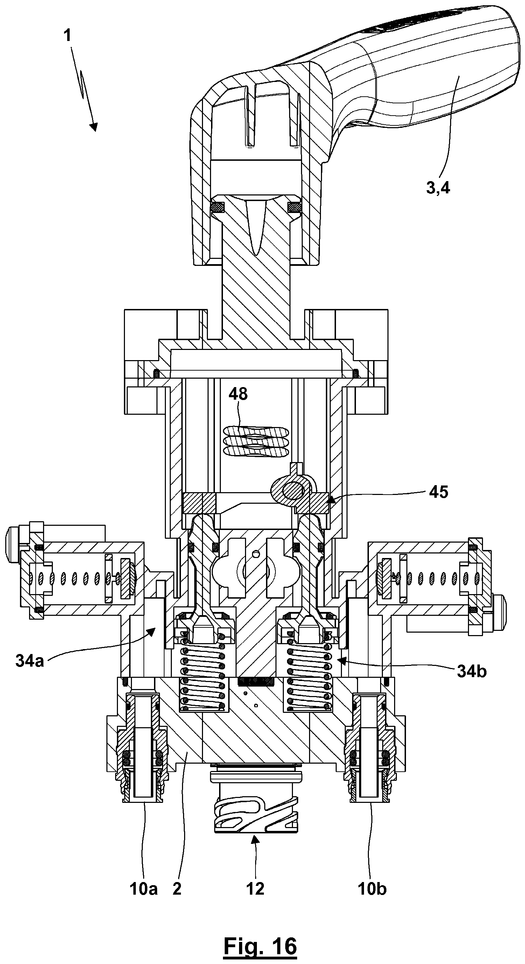

**Fig. 9** und **Fig. 10** zeigen die Hebe-Senk-Ventileinheit 1 in einem Schnitt entsprechend der Schnittführung IX - IX bzw. X - X gemäß Fig. 5. In Fig. 9 und 10 ist die Hebe-Senk-Ventileinheit 1 in der Stellung FAHRT dargestellt. **Fig. 11** **und** **12** zeigen entsprechende geschnittene Darstellungen in der Stellung STOPP, **Fig. 13** **und** **14** entsprechende Darstellungen in der Stellung HEBEN sowie **Fig. 15** **und** **16** entsprechende geschnittene Darstellungen in der Stellung SENKEN.

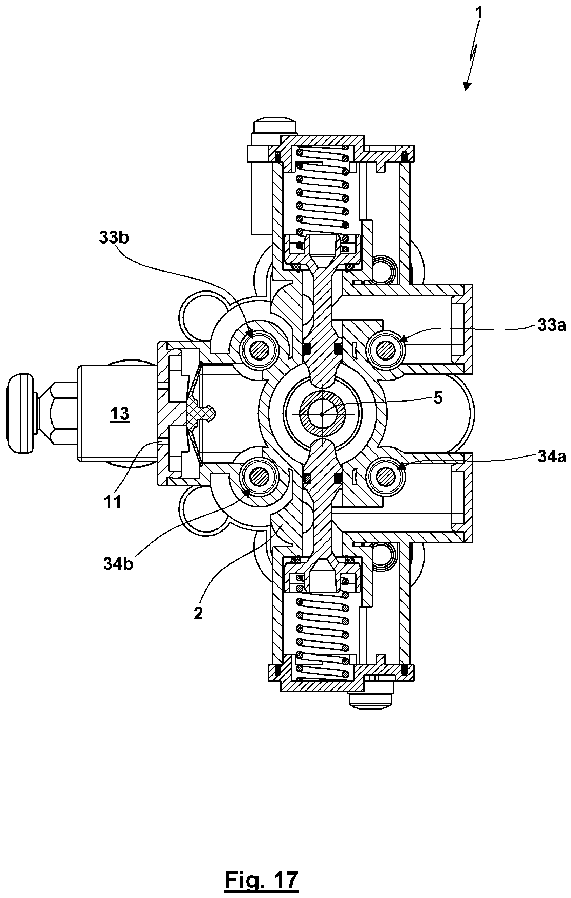

Ein Belüften durch Verbindung des Anschlusses 8 mit dem Anschluss 10 erfolgt über ein Ventil 33, während das Entlüften durch Verbindung des Anschlusses 10 mit der Entlüftung 11 über ein Ventil 34 erfolgt. Für die hier vorliegende zweikreisige Ausbildung sind zwei Ventile 33a, 33b sowie zwei Ventile 34a, 34b vorhanden. Die Betätigung der Ventile 33, 34 erfolgt parallel zur Bewegungsachse 5, wobei die Verteilung der Ventile 33a, 33b, 34a, 34b um die Bewegungsachse 5 insbesondere aus **Fig. 17** ersichtlich ist, welche einen Schnitt gemäß Schnittführung XVII - XVII gemäß Fig. 7 ist.

Die Ventile 33, 34 sind grundsätzlich entsprechend ausgebildet. Beispielhaft wird lediglich ein Ventil 33a näher erläutert:
Das Ventil 33a verfügt über einen Stößel 35a mit abgerundeter Stirnseite 36a. Im Bereich einer Verdickung 37a und einer in einer Nut der Verdickung 37a aufgenommenen Dichtung 38a ist der Stößel 35a in einer Bohrung des Gehäuses 2 unter Abdichtung geführt. Auf der der Stirnseite 36a abgewandten Seite bildet der Stößel 35a einen Ventilkörper 39a mit elastischem Dichtkörper 40a aus, welcher in Wechselwirkung tritt mit einem von dem Gehäuse 2 ausgebildeten Ventilsitz 41a. Der Ventilkörper 39a und damit der Stößel 35a wird über eine Feder 42a in eine Schließstellung beaufschlagt, in welcher der Ventilkörper 39a mit dem Dichtkörper 40a den Ventilsitz 41a schließt. In dieser Schließstellung ist ein Federraum 43a gegenüber einem Übertrittsraum 44a abgesperrt. Der Übertrittsraum 44a ist hierbei hohlzylinderförmig ausgebildet und begrenzt durch die Bohrung des Gehäuses 2, die Verdickung 37a mit der Dichtung 38a und den Ventilkörper 39a mit dem Dichtkörper 40a. Wird hingegen der Stößel 35a entgegen der Beaufschlagung der Feder 42a in Fig. 9 nach unten beaufschlagt, bewegt sich der Ventilkörper 39a mit Dichtkörper 40a von dem Ventilsitz 41 a weg, womit das Ventil 33a seine Öffnungsstellung einnimmt. Die Federräume 43a, b der Ventile 33a, b sind hierbei mit dem Anschluss 8 verbunden, während der Übertrittsraum 44a, 44b der Ventile 33a, 33b verbunden ist mit den Anschlüssen 10a, 10b. Hingegen ist bei den Ventilen 34a, 34b der Federraum 43a, 43b mit den Anschlüssen 10a, 10b verbunden, während bei den Ventilen 34a, 34b der Übertrittsraum 44a, 44b mit der Entlüftung 11 verbunden ist.

Die Betätigung der Ventile 33, 34 erfolgt über eine Kurvenscheibe oder Nockenringscheibe 45 des Schaltorgans 16, welche parallel zur Bewegungsachse 5 hervorstehende Vorsprünge 46 sowie Vertiefungen 47 besitzt. Für die Stellung FAHRT gemäß Fig. 9 und 10 befindet sich die Nockenringscheibe 45 beabstandet von den Stirnseiten 36 der Stößel 35 sämtlicher Ventile 33, 34. Mit Herbeiführung der Stellung STOPP gemäß Fig. 11 und 12 wird die Nockenringscheibe 45 zur Anlage an die Stirnseiten 36 der Stößel 35 der Ventile 33, 34 oder in einen definierten kleinen Abstand zu diesen gebracht. Hierbei befinden sich in der Stellung STOPP gemäß Fig. 11 und 12 die Stößel 35 sämtlicher Ventile 33a, 33b, 34a, 34b in Vertiefungen 47 der Nockenringscheibe 45, was zur Folge hat, dass die Ventile 33, 34 ihre Schließstellung beibehalten.

Erfolgt hingegen eine Verschwenkung des Handhebels 4 und mit diesem des Schaltorgans 16 in die Stellung HEBEN gemäß Fig. 13 und 14, liegen die Stirnseiten 36a, 36b der Ventile 33a, 33b an Vorsprüngen 46 der Nockenringschreibe 45 an, sodass die Ventile 33a, 33b ihre Öffnungsstellung einnehmen. Hingegen liegen die Stirnseiten 36a, 36b der Ventile 34a, 34b an Vertiefungen 47 der Nockenringscheibe 45 an oder die Stirnseiten 36a, 36b der Ventile 34a, 34b haben einen kleinen Abstand von den Vertiefungen 47 der Nockenringscheibe 45, sodass die Ventile 34a, 34b ihre Schließstellung einnehmen. Es erfolgt somit eine Belüftung der Luftfederbälge, womit ein Heben veranlasst ist.

Entsprechend führt eine Verschwenkung des Wählhebels 4 und des Schaltorgans 16 in die Stellung SENKEN gemäß Fig. 15 und 16 dazu, dass die Stirnseiten 36a, 36b der Ventile 33a, 33b anliegen an Vertiefungen 47 der Nockenringscheibe 45 oder die Stirnseiten 36a, 36b der Ventile 33a, 33b haben einen kleinen Abstand von den Vertiefungen 47 der Nockenringscheibe 45, sodass die Ventile 33a, 33b ihre Schließstellung einnehmen. Gleichzeitig liegen die Stirnseiten 36a, 36b der Ventile 34a, 34b an Vorsprüngen 46 der Nockenringscheibe 45 an, womit die Ventile 34a, 34b ihre Öffnungsstellung einnehmen. Es erfolgt somit eine Entlüftung der Luftfederbälge mit einem damit einhergehenden Senken des Fahrzeugaufbaus.

Die Vorsprünge 46 und Vertiefungen 47 sind geeignet auf einer quer zur Längsachse und Bewegungsachse 5 des Schaltorgans 16 orientierten Ringfläche vorgesehen und geeignet zur Gewährleistung der erläuterten Funktion verteilt, wobei zwischen den Vorsprüngen 46 und Vertiefungen 47 Schrägen angeordnet sind, um mit der Verschwenkung des Schaltorgans 16 eine gleichmäßige Bewegung der Stößel 35 bewirken zu können. Über die Kontur der Nockenringscheibe 45 und insbesondere die Erstreckung der Vorsprünge 46 und der Vertiefungen 47 parallel zur Bewegungsachse 5 kann vorgegeben werden, wie weit die Ventile 33, 34 geöffnet werden. Darüber hinaus kann die Betätigungskinematik und die Haptik der Hebe-Senk-Ventileinheit 1 über die Konturgestaltung beeinflusst werden.

Die Verschwenkung des Schaltorgans 16 aus der Stellung STOPP in die Stellung HEBEN und SENKEN erfolgt gegen die Beaufschlagung einer Torsionsfedern 48. Sofern keine im Folgenden noch beschrieben Verrastung oder Verriegelung des Schaltorgans erfolgt, bewirkt die Torsionsfeder 48, das die Stellung STOPP eine stabile Gleichgewichtslage darstellt und aus der Stellung HEBEN oder SENKEN bei Entfall der manuellen Betätigungskräfte, die der Benutzer auf den Handhebel 4 aufbringt, das Schaltorgan von der Stellung HEBEN oder SENKEN automatisch zurückkehrt in die Stellung STOPP. Die Torsionsfeder 48 ist hierbei jeweils mit einem Federfußpunkt an dem Schaltorgan 16 fixiert, während die Torsionsfeder 48 mit oder ohne Vorspannung in unterschiedliche Umfangsrichtungen um die Bewegungsachse 5 ohne eine Fixierung an einem Vorsprung des Gehäuses anliegt. Kommt es aus dieser Gleichgewichtslage zu einer Schwenkbewegung des Schaltorgans 16 in Richtung HEBEN oder SENKEN, löst sich je nach Bewegungsrichtung ein Federfußpunkt der Torsionsfeder 48 von dem Vorsprung des Gehäuses, während die Beaufschlagung der Torsionsfeder ansteigt, indem der feste Federfußpunkt dieser Torsionsfeder 48 zunehmend an den Vorsprung des Gehäuses 2 angepresst wird.

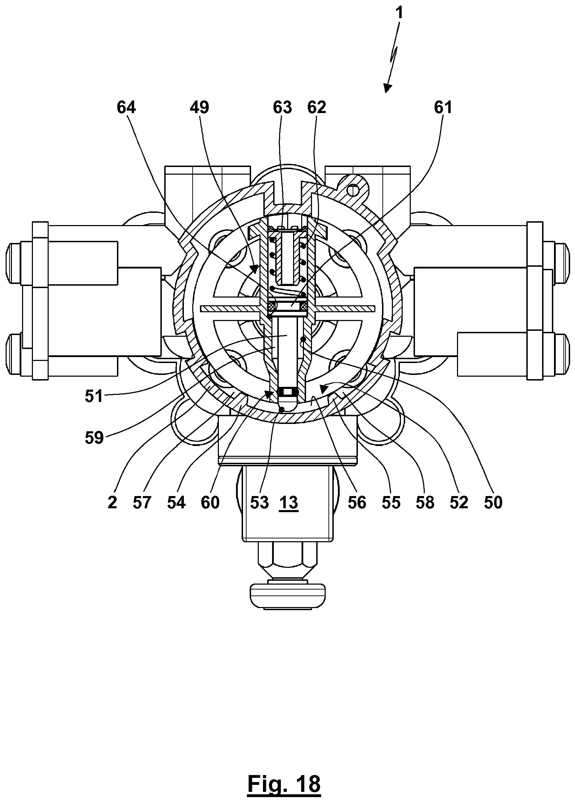

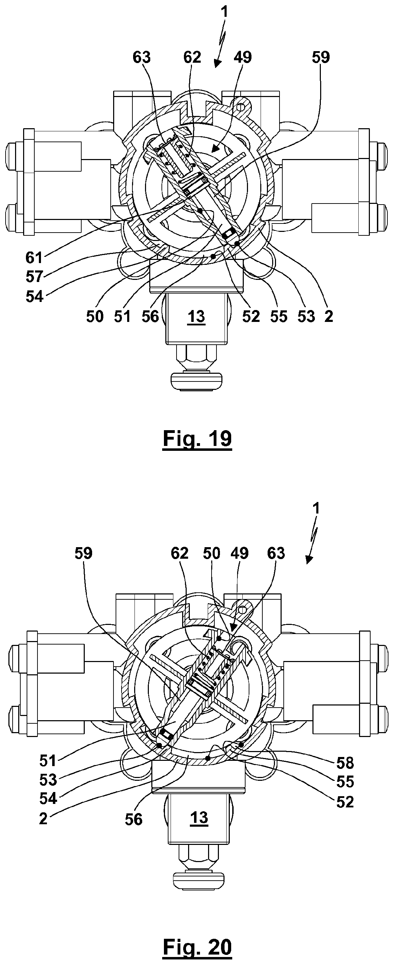

**Fig. 18** zeigt eine Rast- oder Verriegelungseinrichtung 49 in der Stellung STOPP bei Schnittführung XVIII - XVIII gemäß Fig. 8, während **Fig. 19** eine entsprechende geschnittene Darstellung der Rast- oder Verriegelungseinrichtung 49 in der Stellung HEBEN zeigt und **Fig. 20** bei entsprechender Schnittführung die Rast- oder Verriegelungseinrichtung 49 in der Stellung SENKEN zeigt.

Das Schaltorgan 16 besitzt eine quer zu Längs- und Bewegungsachse 5 orientierte, hier durchgehende Ausnehmung 50. In der Ausnehmung 50 ist ein Rast- oder Verriegelungselement 51 verschieblich zwischen einer gelösten Stellung, in welcher sich das Rast- oder Verriegelungselement 51 nicht oder in vermindertem Ausmaß radial aus dem Schaltorgan 16 heraus erstreckt, und einer rastierten oder verriegelten Stellung, in welcher sich das Rast- oder Verriegelungselement 51 aus dem Schaltorgan 16 heraus oder weiter heraus erstreckt. In den Fig. 18 bis 20 ist zu erkennen, dass das Gehäuse 2 eine Rast- oder Verriegelungskontur 52 ausbildet. Der relevante Teil der Rast- oder Verriegelungskontur 52 ist - stark vereinfacht gesagt - T-förmig ausgebildet, wobei der Vertikalschenkel des T parallel zu Bewegungsachse 5 orientiert ist und vertikal zur Zeichenebene gemäß den Fig. 18 bis 20 orientiert ist. Der Vertikalschenkel des T wird von dem Rast- oder Verriegelungselement 51 passiert im Bereich der translatorischen Bewegung entlang der Bewegungsachse 5 zwischen der Stellung FAHRT und der Stellung STOPP, wobei sich in diesem Bereich der Rast- oder Verriegelungskontur 52 eine Stirnseite 53 des Rast- oder Verriegelungselement2 51 in einem geringfügigen Abstand von der Rast- oder Verriegelungskontur 52, also dem Gehäuse 2, befindet, sodass hier keine die Bewegung des Schaltorgans 16 behindernde Reibung auftritt. Hingegen ist der Horizontalschenkel des T in den Fig. 18 bis 20 in Umfangsrichtung um die Bewegungsachse 5 orientiert. Dieser Horizontalschenkel des T verfügt über zwei Vorsprünge 54, 55, zwischen welchen eine Rast- oder Verriegelungsausnehmung 56 gebildet ist. Auf der der Rast- oder Verriegelungsausnehmung 56 abgewandten Seite begrenzen die Vorsprünge 54, 55 jeweils eine weitere Rast- oder Verriegelungsausnehmung 57, 58. Während der Bewegung zwischen den Stellungen FAHRT und STOPP befindet sich die Stirnseite 53 des Rast- oder Verriegelungselements 51 im Bereich der Rast- oder Verriegelungsausnehmung 56. Mit der Verschwenkung des Schaltorgans 16 in die Stellung HEBEN gemäß Fig. 19 bewegt sich die Stirnseite 53 in Richtung des Vorsprungs 55, bis die Stirnseite 53 zur Anlage an den Vorsprung 54 kommt. Da die den Vorsprung 54 begrenzende Seitenfläche geneigt ist, führt die weitere Verschwenkung in Richtung der Stellung HEBEN dazu, dass das Rast- oder Verriegelungselement 51 in das Schaltorgan 16 hineinverschoben wird. Nach Überwinden des Vorsprungs 55 hintergreift die Stirnseite 53 des Rast- oder Verriegelungselements 51 den Vorsprung 55, womit das Rast- oder Verriegelungselement 51 in die Rast- oder Verriegelungsausnehmung 58 eingreift. Das entsprechende gilt für die Verschwenkung aus der Stellung STOPP in die Stellung SENKEN gemäß Fig. 20, wobei in diesem Fall das Rast- oder Verriegelungselement 51 in Wechselwirkung tritt mit dem Vorsprung 54 und in die Rast- oder Verriegelungsausnehmung 57 eingreift.

Ein Steuerraum 59 ist radial außenliegend begrenzt durch die Ausnehmung 50 des Schaltorgans 16, radial Innen liegend begrenzt durch einen zylindrischen Teilbereich des Rast- oder Verriegelungselements 51, in dem der Stirnseite 53 zugewandten Endbereich durch einen Dicht- und Führungsbereich 60 sowie im gegenüber liegenden Endbereich durch einen von dem Rast- oder Verriegelungselement 51 gebildeten Steuerkolben 61. Auf der dem Steuerraum 59 abgewandten Seite stützt sich an dem Steuerkolben 61 ein Federfußpunkt einer Feder 62 ab. Der andere Federfußpunkt der Feder 62 ist an dem Schaltorgan 16 abgestützt. Dies erfolgt für das dargestellte Ausführungsbeispiel über einen in der Ausnehmung 50 des Schaltorgans 16 verstemmten Einsatzkörper 63. Über die Feder 62 wird das Rast- oder Verriegelungselement 51 radial zu der Bewegungsachse 5 aus der Ausnehmung 50 des Schaltorgans 16 heraus beaufschlagt. Allerdings ist die Bewegung des Rast- oder Verriegelungselements 51 nach außen begrenzt dadurch, dass der Steuerkolben 61 zur Anlage kommt an einen Absatz 64 der Ausnehmung 50 des Schaltorgans 16. Hierbei ist der Absatz 64 derart angeordnet, dass in dem genannten Vertikalschenkel des T der Rast- oder Verriegelungskontur 52 und im Bereich der Rast- oder Verriegelungsausnehmung 56 die Stirnseite 53 des Rast- oder Verriegelungselements 51 noch einen geringen Abstand zu der Rast- oder Verriegelungskontur 52 besitzt. Kommt die Stirnseite 53 des Rast- oder Verriegelungselements 51 zur Anlage an die Vorsprünge 54, 55, muss für die Bewegung des Rast- oder Verriegelungselements 51 nach innen die Feder 62 zunehmend beaufschlagt werden. Über die Wahl der Federsteifigkeit der Feder 62, die Höhe der Vorsprünge 54, 55 und die Konturgestaltung der seitlichen Flanken der Vorsprünge 54, 55 können die Betätigungscharakteristik, der Betätigungskraftverlauf und die maximal aufzubringende Kraft zur Überwindung der Vorsprünge 54, 54 vorgegeben werden. In Folge der Feder 62 "schnappt" das Rast- oder Verriegelungselement 51 mit Erreichen einer Stellung HEBEN oder SENKEN hinter den jeweiligen Vorsprung 54, 55. Hierbei ist die Torsionskraft, die erforderlich ist, um das Schaltorgan 16 aus der Stellung HEBEN oder SENKEN wieder zurück zu bewegen und das Rast- oder Verriegelungselement 51 über den zugeordneten Vorsprung 54, 55 zu "heben", größer als die Torsionskraft der Torsionsfedern 48, sodass ohne weitere einwirkende Kräfte und ohne Entrastung oder Entriegelung eine rastierte Stellung HEBEN oder SENKEN gemäß Fig. 19 oder 20 beibehalten bleibt.

Für das Lösen der verrasteten oder verriegelten Stellung HEBEN oder SENKEN ist die pneumatische Beaufschlagung des Steuerraums 59 mit einem pneumatischen Steuerdruck erforderlich. Dieser pneumatische Steuerdruck wird gesteuert über das Magnetventil 13, welches bei Ansteuerung durch ein elektronisches Steuersignal über den Anschluss 12 eine Belüftungsstellung einnimmt. Die Belüftungsstellung des Magnetventils 13 hat zur Folge, dass über einen Kanal 65 Druckluft in einen Innenraum 66 der Hülse 17 gelangen kann (vgl. Fig. 6). Der Innenraum 66 ist permanent über einen Kanal 67 des Schaltorgans 16 mit dem Steuerraum 59 verbunden. Somit führt die Belüftungsstellung des Magnetventils 13 zu einer auf den Steuerkolben 61 wirkenden Kraft, welche das Rast- oder Verriegelungselement 51 von der Rast- oder Verriegelungskontur 52 wegbewegt.

Vorzugsweise sind zwei unterschiedliche Möglichkeiten gegeben, um eine über die Rast- oder Verriegelungseinrichtung 49 verrastete oder verriegelte Stellung HEBEN oder SENKEN zu verlassen:
a) Einerseits können über den Handhebel 4 Betätigungskräfte aufgebracht werden, welche zur Folge haben, dass an den begrenzenden Schrägen der Vorsprünge 54, 55 Kräfte erzeugt werden, welche zur Folge haben, dass das Rast- oder Verriegelungselement 51 entgegen der Beaufschlagung durch die Feder 62 von der Rast- oder Verriegelungskontur 52 wegbewegt wird. Ist der zugeordnete Vorsprung 54, 55 infolge der manuellen Betätigung überwunden, kann die Rückstellung in die Stellung STOPP erfolgen, was unter Unterstützung durch die Torsionsfeder 48 erfolgen kann.
b) Auch ohne Aufbringung manueller Betätigungskräfte auf den Handhebel 4 kann eine verrastete oder verriegelte Stellung HEBEN oder SENKEN verlassen werden, wenn das Magnetventil 13 in die Belüftungsstellung umgeschaltet wird. Dies hat zur Folge, dass das Rast- oder Verriegelungselement 51 von seiner verriegelten oder verrasteten Axialstellung zurückbewegt wird in die gelöste Stellung, womit die Stirnseite 53 des Rast- oder Verriegelungselements 51 außer Eingriffs mit der Rast- oder Verriegelungsausnehmung 57, 58 und dem Vorsprung 54, 55 kommt. Für derart entrastete oder entriegelte Rast- oder Verriegelungseinrichtung 49 kann ebenfalls die Torsionsfeder 48 eine Rückführung in die Stellung STOPP bewirken. In diesem Fall wirkt aber auf das Schaltorgan 16, insbesondere im Innenraum 66 der Hülse 17 sowie im Bereich der dem Handhebel 4 abgewandten Stirnseite der Hülse 17 eine pneumatische Kraft, welche nach Rückkehr in die Stellung STOPP auch eine Bewegung des Schaltorgans 16 in die Stellung FAHRT verursacht. Somit wird durch Überführen des Magnetventils 13 in die Belüftungsstellung die Reset-to-Ride-Funktion ausgeführt.

In der Stellung FAHRT rasten die Stirnseiten der Stößel 23 ein in die Umfangsnut 21. Soll durch manuelle Betätigung die Hebe-Senk-Ventileinheit 1 wieder in die Stellung STOPP überführt werden, muss eine Kraft in Richtung der Bewegungsachse 5 auf den Handhebel 4 aufgebracht werden, welche ausweichend ist, um den Stößel 23 entgegen der Beaufschlagung durch die Feder 30 aus der Umfangsnut 21 herauszudrücken. Während dieser Bewegung in die Stellung FAHRT gleiten die Stirnseiten der Stößel 23 entlang der Mantelfläche der Hülse 17.

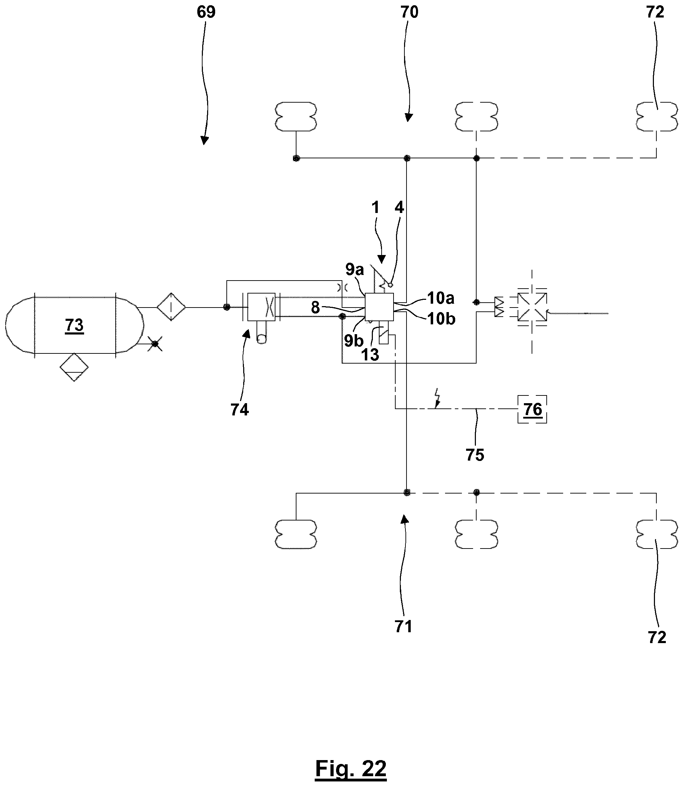

Fig. 22 zeigt die Integration einer Hebe-Senk-Ventileinheit 1 in eine Luftfederungsanlage 69 mit zwei Kreisen 70, 71 mit Luftfederbälgen 72. Hierbei ist jeweils ein Kreis 70, 71 einer Fahrzeugseite zugeordnet. In der Luftfederungsanlage 69 ist eine Druckluftquelle 73, insbesondere ein Vorratsbehälter, über ein hier mechanisches Niveauregelventil 74, welches zweikreisig ausgebildet ist (und welches alternativ oder kumulativ elektronisch ausgebildet sein kann), mit den Anschlüssen 9a, 9b der Hebe-Senk-Ventileinheit 1 verbunden. Hingegen ist der Anschluss 8 unter Umgehung des Niveauregelventils 74 mit der Druckluftquelle 73 verbunden. Die Anschlüsse 10a, 10b sind mit den Luftfederbälgen 72 der Kreise 70, 71 verbunden. Die Ansteuerung des Magnetventils 13 der Hebe-Senk-Ventileinheit 1 erfolgt hier über eine elektronische Steuerleitung 75 durch eine elektronische Steuereinheit 76, welche ausschließlich für die Ansteuerung der Hebe-Senk-Ventileinheit 1 zuständig sein kann oder multifunktional sein kann. Um lediglich ein nicht beschränkendes Beispiel zu nennen kann die elektronische Steuereinheit 76 auch für eine Bremssteuerung zuständig sein und Bestandteil eines ABS- oder EBS-Moduls sein. Möglich ist, dass ein mechanisches und/oder elektronisches Niveauregelventil 74 und/oder eine elektronische Steuereinheit 76 in die Hebe-Senk-Ventileinheit 1 integriert sind/ist.

### BEZUGSZEICHENLISTE

- 1: Hebe-Senk-Ventileinheit
- 2: Gehäuse
- 3: Betätigungsorgan
- 4: Handhebel
- 5: Bewegungsachse
- 6: Befestigungsauge
- 7: Befestigungsauge
- 8: Anschluss (Druckluftbehälter)
- 9: Anschluss (Niveauregelventil)
- 10: Anschluss (Luftfederbalg)
- 11: Entlüftung
- 12: elektrischer Anschluss
- 13: Magnetventil
- 14: Prüfanschluss
- 15: Schraube
- 16: Schaltorgan
- 17: Hülse
- 18: Abschnitt
- 19: Abschnitt
- 20: Abschnitt
- 21: Umfangsnut
- 22: Ventil
- 23: Stößel
- 24: Ventilkörper
- 25: Dichtkörper
- 26: Ventilsitz
- 27: Dichtelement
- 28: Luftfederbalgkammer
- 29: Niveauregelventilkammer
- 30: Feder
- 31: Kulisse
- 32: Kulissenstein
- 33: Ventil (Belüften)
- 34: Ventil (Entlüften)
- 35: Stößel
- 36: Stirnseite
- 37: Verdickung
- 38: Dichtung
- 39: Ventilkörper
- 40: Dichtkörper
- 41: Ventilsitz
- 42: Feder
- 43: Federraum
- 44: Übertrittsraum
- 45: Nockenringscheibe
- 46: Vorsprung
- 47: Vertiefung
- 48: Torsionsfeder
- 49: Rast- oder Verriegelungseinrichtung
- 50: Ausnehmung
- 51: Rast- oder Verriegelungselement
- 52: Rast- oder Verriegelungskontur
- 53: Stirnseite
- 54: Vorsprung
- 55: Vorsprung
- 56: Rast- oder Verriegelungsausnehmung (STOPP, FAHRT)
- 57: Rast- oder Verriegelungsausnehmung (SENKEN)
- 58: Rast- oder Verriegelungsausnehmung (HEBEN)
- 59: Steuerraum
- 60: Dicht- und Führungsbereich
- 61: Steuerkolben
- 62: Feder
- 63: Einsatzkörper
- 64: Absatz
- 65: Kanal
- 66: Innenraum
- 67: Kanal
- 68: Hülse
- 69: Luftfederungsanlage
- 70: Kreis
- 71: Kreis
- 72: Luftfederbalg
- 73: Druckluftquelle
- 74: Niveauregelventil
- 75: Steuerleitung
- 76: Steuereinheit

## Patentansprüche

1. Hebe-Senk-Ventileinheit (1) mit
a) einem Schaltorgan (16),
aa) welches zur Herbeiführung unterschiedlicher Stellungen entlang einer Bewegungsachse (5) translatorisch verschiebbar und/oder um die Bewegungsachse (5) verdrehbar ist,
ab) wobei in einer Stellung des Schaltorgans (16) eine Belüftung und/oder in einer Stellung des Schaltorgans (16) eine Entlüftung eines Anschlusses (10) für einen Luftfederbalg (72) erfolgt,
und
b) einer Rast- oder Verriegelungseinrichtung (49),
ba) welche über ein Rast- oder Verriegelungselement (51) sowie eine Rast- oder Verriegelungsausnehmung (56; 57; 58) verfügt,
bb) wobei das Rast- oder Verriegelungselement (51) in einer Rast- oder Verriegelungsstellung in die Rast- oder Verriegelungsausnehmung (56; 57; 58) eingreift,
**dadurch gekennzeichnet, dass**
c) das Rast- oder Verriegelungselement (51) in dem Schaltorgan (16) geführt ist und zur Herbeiführung der Rast- oder Verriegelungsstellung aus dem Schaltorgan (16) herausbewegbar ist.

2. Hebe-Senk-Ventileinheit (1) nach Anspruch 1, **dadurch gekennzeichnet, dass** das Rast- oder Verriegelungselement (51) in einer quer zu der Bewegungsachse (5) des Schaltorgans (16) orientierten Ausnehmung (50) geführt ist.

3. Hebe-Senk-Ventileinheit (1) nach Anspruch 1 oder 2, **dadurch gekennzeichnet, dass** eine Feder (62) vorhanden ist, wobei
a) ein Federfußpunkt der Feder (62) an dem Schaltorgan (16) abgestützt ist und
b) ein anderer Federfußpunkt der Feder (62) an dem Rast- oder Verriegelungselement (51) abgestützt ist.

4. Hebe-Senk-Ventileinheit (1) nach Anspruch 3, **dadurch gekennzeichnet, dass** das Rast- oder Verriegelungselement (51) über die Feder (62) in die Rast- oder Verriegelungsstellung beaufschlagt ist.

5. Hebe-Senk-Ventileinheit (1) nach einem der vorhergehenden Ansprüche, **dadurch gekennzeichnet, dass** das Rast- oder Verriegelungselement (51) mittels eines pneumatischen Steuerdrucks verrastbar oder verriegelbar ist und/oder entrastbar oder entriegelbar ist.

6. Hebe-Senk-Ventileinheit (1) nach Anspruch 5, **dadurch gekennzeichnet, dass** der pneumatische Steuerdruck dem Rast- oder Verriegelungselement (51) über einen sich durch das Schaltorgan (16) hindurch erstreckenden Kanal (67) und/oder Innenraum (66) zuführbar ist.

7. Hebe-Senk-Ventileinheit (1) nach einem der vorhergehenden Ansprüche, **dadurch gekennzeichnet, dass** das Rast- oder Verriegelungselement (51) in Abhängigkeit eines elektrischen Steuersignals verrastbar oder verriegelbar ist und/oder entrastbar oder entriegelbar ist.

8. Hebe-Senk-Ventileinheit (1) nach einem der vorhergehenden Ansprüche 5 bis 7, **dadurch gekennzeichnet, dass** das elektrische Steuersignal und/oder der pneumatische Steuerdruck auch eine Reset-to-Ride-Funktion steuern/steuert.

9. Hebe-Senk-Ventileinheit (1) nach einem der vorhergehenden Ansprüche, **dadurch gekennzeichnet, dass** das Schaltorgan (16) ausschließlich zwei Axialstellungen besitzt.

10. Hebe-Senk-Ventileinheit (1) nach Anspruch 9, **dadurch gekennzeichnet, dass** die zwei Axialstellungen jeweils stabil sind, wobei
a) eine Axialstellung durch Aufbringung einer manuellen Betätigungskraft herbeiführbar ist,
b) während die andere Axialstellung durch die Reset-to-Ride-Funktion herbeiführbar ist.

11. Hebe-Senk-Ventileinheit (1) nach einem der vorhergehenden Ansprüche, **dadurch gekennzeichnet, dass** das Hebe-Senk-Ventileinheit (1) zweikreisig ausgebildet ist.

12. Hebe-Senk-Ventileinheit (1) nach einem der vorhergehenden Ansprüche, **dadurch gekennzeichnet, dass** in die Hebe-Senk-Ventileinheit (1) eine elektronische Niveauregelung integriert ist.

13. Luftfederungsanlage (69) eines Nutzfahrzeuges mit einer Hebe-Senk-Ventileinheit (1) nach einem der vorhergehenden Ansprüche, welche zwischen eine Druckluftquelle (73) und einen Luftfederbalg (72) andererseits zwischengeordnet ist.

## Claims

1. Lifting-lowering valve unit (1) with
a) a switching means (16),
aa) which can be moved translationally along a movement axis (5) and/or rotated about the movement axis (5) for inducing different positions,
ab) in a position of the switching means (16) an aeration and/or in a position of the switching means (16) a deaeration of a port (10) for an air suspension bellow (72) being provided,
and
b) a latching or locking device (49),
ba) which comprises a latching or locking element (51) and a latching or locking recess (56; 57; 58),
bb) the latching or locking element (51) engaging with the latching or locking recess (56; 57; 58) in a latching or locking position,
**characterised in that**
c) the latching or locking element (51) is guided in the switching means (16) and can be moved out of the switching means (16) for providing the latching or locking position.

2. Lifting-lowering valve unit (1) of claim 1, **characterised in that** the latching or locking element (51) is guided in a recess (50) having an orientation transverse to the movement axis (5) of the switching means (16).

3. Lifting-lowering valve unit (1) of claim 1 or 2, **characterised in that** a spring (62) is provided,
a) a spring base of the spring (62) being supported by the switching means (16) and
b) another spring base of the spring (62) being supported by the latching or locking element (51).

4. Lifting-lowering valve unit (1) of claim 3, **characterised in that** the latching or locking element (51) is biased by the spring (62) into the latching or locking position.

5. Lifting-lowering valve unit (1) of one of the preceding claims, **characterised in that** the latching or locking element (51) can be latched or locked and/or unlatched or unlocked by means of a pneumatic control pressure.

6. Lifting-lowering valve unit (1) of claim 5, **characterised in that** the pneumatic control pressure can be supplied to the latching or locking element (51) via an inner chamber (66) and/or via a channel (67) extending through the switching means (16).

7. Lifting-lowering valve unit (1) of one of the preceding claims, **characterised in that** the latching or locking element (51) can be latched or locked and/or unlatched or unlocked dependent on an electric control signal.

8. Lifting-lowering valve unit (1) of one of the preceding claims 5 to 7, **characterised in that** the electric control signal and/or the pneumatic control pressure also controls/control a reset-to-ride function.

9. Lifting-lowering valve unit (1) of one of the preceding claims, **characterised in that** the switching means (16) comprises only two axial positions.

10. Lifting-lowering valve unit (1) of claim 9, **characterised in that** the two axial positions are both stable,
a) one axial position only being inducible by an application of a manual actuating force,
b) whereas the other axial position can be induced by the reset-to-ride function.

11. Lifting-lowering valve unit (1) of one of the preceding claims, **characterised in that** the lifting-lowering valve unit (1) comprises two circuits.

12. Lifting-lowering valve unit (1) of one of the preceding claims, **characterised in that** an electronic level control is integrated into the lifting-lowering valve unit (1).

13. Air suspension system (69) of a commercial vehicle comprising a lifting-lowering valve unit (1) according to one of the preceding claims which is interposed between a compressed air source (73) and an air suspension bellow (72).

## Revendications

1. Unité de valve de levage et d'abaissement (1), avec
a) un organe de commande (16),
aa) qui, pour susciter différentes positions, peut être déplacé en translation le long d'un axe de mouvement (5) et/ou peut être tourné autour de l'axe de mouvement (5),
ab) une ventilation s'effectuant dans une position de l'organe de commande (16), et/ou une purge d'air d'un raccord (10) pour un coussin d'air pneumatique (72) s'effectuant dans une position de l'organe de commande (16)
et
b) un système d'encliquetage ou de verrouillage (49)
ba) qui dispose d'un élément d'encliquetage ou de verrouillage (51) ainsi que d'un creux d'encliquetage ou de verrouillage (56; 57; 58),
bb) l'élément d'encliquetage ou de verrouillage (51), dans une position d'encliquetage ou de verrouillage, s'engageant dans le creux d'encliquetage ou de verrouillage (56; 57; 58),
**caractérisée en ce que**
c) l'élément d'encliquetage ou de verrouillage (51) est guidé dans l'organe de commande (16) et peut être sorti de l'organe de commande (16) pour susciter la position d'encliquetage ou de verrouillage.

2. Unité de valve de levage et d'abaissement (1) selon la revendication 1, **caractérisée en ce que** l'élément d'encliquetage ou de verrouillage (51) est guidé dans un creux (50) orienté transversalement à l'axe de mouvement (5) de l'organe de commande (16).

3. Unité de valve de levage et d'abaissement (1) selon la revendication 1 ou 2, **caractérisée en ce qu'**il existe un ressort (62),
a) un point de pied de ressort du ressort (62) étant appuyé sur l'organe de commande (16), et
b) un autre point de pied de ressort du ressort (62) étant appuyé sur l'élément d'encliquetage ou de verrouillage (51) .

4. Unité de valve de levage et d'abaissement (1) selon la revendication 3, **caractérisée en ce que** l'élément d'encliquetage ou de verrouillage (51) est poussé dans la position d'encliquetage ou de verrouillage par le biais du ressort (62).

5. Unité de valve de levage et d'abaissement (1) selon l'une des revendications précédentes, **caractérisée en ce que** l'élément d'encliquetage ou de verrouillage (51) peut être encliqueté ou verrouillé et/ou peut être désencliqueté ou déverrouillé au moyen d'une pression de commande pneumatique.

6. Unité de valve de levage et d'abaissement (1) selon la revendication 5, **caractérisée en ce que** la pression de commande pneumatique peut être conduite à l'élément d'encliquetage ou de verrouillage (51) par le biais d'un canal (67) et/ou d'un espace intérieur (66) s'étendant à travers l'organe de commande (16).

7. Unité de valve de levage et d'abaissement (1) selon l'une des revendications précédentes, **caractérisée en ce que** l'élément d'encliquetage ou de verrouillage (51) peut être encliqueté ou verrouillé et/ou peut être désencliqueté ou déverrouillé en fonction d'un signal de commande électrique.

8. Unité de valve de levage et d'abaissement (1) selon l'une des revendications précédentes 5 à 7, **caractérisée en ce que** le signal de commande électrique et/ou la pression de commande pneumatique commande/commandent également une fonction reset-to-ride.

9. Unité de valve de levage et d'abaissement (1) selon l'une des revendications précédentes, **caractérisée en ce que** l'organe de commande (16) possède exclusivement deux positions axiales.

10. Unité de valve de levage et d'abaissement (1) selon la revendication 9, **caractérisée en ce que** les deux positions axiales sont respectivement stables,
a) une position axiale pouvant être suscitée par l'application d'une force d'actionnement manuelle,
b) tandis que l'autre position axiale peut être suscitée par la fonction reset-to-ride.

11. Unité de valve de levage et d'abaissement (1) selon l'une des revendications précédentes, **caractérisée en ce que** l'unité de valve de levage et d'abaissement (1) est à double circuit.

12. Unité de valve de levage et d'abaissement (1) selon l'une des revendications précédentes, **caractérisée en ce qu'**une régulation de niveau électronique est intégrée dans l'unité de valve de levage et d'abaissement (1).

13. Système de suspension pneumatique (69) d'un véhicule utilitaire avec une unité de valve de levage et d'abaissement (1) selon l'une des revendications précédentes qui est intercalée entre une source d'air comprimé (73) et un coussin d'air pneumatique (72) d'un autre côté.
